(19) **Europäisches Patentamt / European Patent Office / Office européen des brevets**

(11) **EP 2 474 886 A1**

(12) **EUROPEAN PATENT APPLICATION**

(43) Date of publication:
**11.07.2012 Bulletin 2012/28**

(51) Int Cl.:
**G06F 3/041** (2006.01)    **G06F 3/048** (2006.01)

(21) Application number: **11150257.1**

(22) Date of filing: **05.01.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Research In Motion Limited Waterloo, ON N2L 3W8 (CA)**

(72) Inventor: **Golovchenko, Mykola Sunnyvale, CA 94089 (US)**

(74) Representative: **Fennell, Gareth Charles et al Kilburn & Strode LLP 20 Red Lion Street London WC1R 4PJ (GB)**

Remarks:
Amended claims in accordance with Rule 137(2) EPC.

(54) **Electronic device and method of controlling same**

(57)    A method includes detecting a touch on a touch-sensitive display of an electronic device, determining a distance between a first filtered touch location established based on a first detected touch location at a first time, and a second detected touch location at a second time, filtering noise from the second detected touch location to determine a second filtered touch location, wherein the filtering is based on the distance.

FIG. 3

EP 2 474 886 A1

**Description**

**FIELD OF TECHNOLOGY**

The present disclosure relates to electronic devices inducing, but not limited to, portable electronic devices having touch-sensitive displays and their control.

**BACKGROUND**

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones, Personal Digital Assistants (PDAs), tablet computers, and laptop computers, with wireless network communications or near-field communications connectivity such as Bluetooth® capabilities.

Portable electronic devices such as PDAs, or tablet computers are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive display may be modified depending on the functions and operations being performed. Improvements in electronic devices with touch-sensitive displays are desirable.

**SUMMARY**

A method includes detecting a touch on a touch-sensitive display of an electronic device, determining a distance between a first filtered touch location established based on a first detected touch location at a first time, and a second detected touch location at a second time, filtering noise from the second detected touch location to determine a second filtered touch location, wherein the filtering is based on the distance. An electronic device includes a touch-sensitive display configured to detect a touch, and a processor coupled to the touch-sensitive display to determine a distance between a first filtered touch location established based on a first detected touch location at a first time, and a second detected touch location at a second time, and filter noise from the second detected touch location to determine a second filtered touch location. The filtering is based on the distance. A touch-sensitive display includes a display, a touch-sensitive overlay disposed on the display, and a controller coupled to the touch-sensitive overlay to detect a touch on the touch-sensitive overlay, determine a distance between a first filtered touch location established based on a first detected touch location at a first time, and a second detected touch location at a second time, and filter noise from the second detected touch location to determine a second filtered touch location. The filtering is based on the distance.

**BRIEF DESCRIPTION OF THE DRAWINGS**

FIG. 1 is a block diagram of a portable electronic device in accordance with an example embodiment.
FIG. 2 is a front view of an example of a portable electronic device in accordance with the disclosure.
FIG. 3 is a flowchart illustrating a method of controlling the portable electronic device in accordance with the disclosure.
FIG. 4 is a graph illustrating an example of a relationship between the rate of movement of a touch and a filter value.

**DETAILED DESCRIPTION**

The following describes an electronic device and a method that includes detecting a touch on a touch-sensitive display of an electronic device, determining a distance between a first filtered touch location established based on a first detected touch location at a first time, and a second detected touch location at a second time, filtering noise from the second detected touch location to determine a second filtered touch location, wherein the filtering is based on the distance.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, which is a portable electronic device in the embodiments described herein. Examples of portable electronic devices include mobile, or handheld, wireless communication devices such as pagers, cellular phones, cellular smart-phones, wireless organizers, PDAs, wirelessly enabled notebook computers, tablet computers, and so forth. The portable electronic device may also be a portable electronic device without wireless communication capabilities, such as a handheld electronic game device, digital photograph album, digital camera, or other device.

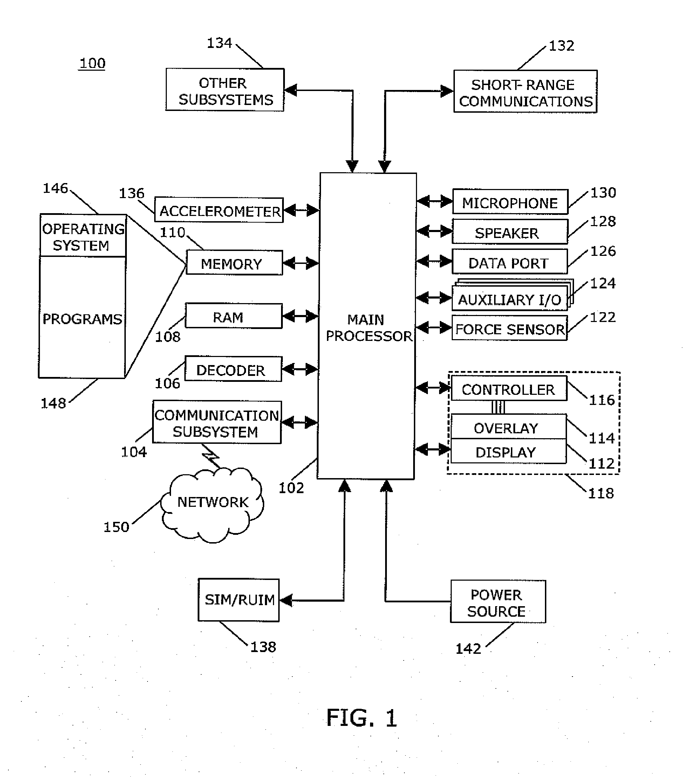

A block diagram of an example of an electronic device 100 is shown in FIG. 1. The electronic device 100, which may be a portable electronic device, includes multiple components, such as a processor 102 that controls the overall operation of the electronic device 100. The electronic device 100 presently described optionally includes a communication subsystem 104 and a short-range communications 132 module to perform various communication functions, including data and voice communications. Data received by the electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the electronic device 100.

The processor 102 interacts with other components, such as Random Access Memory (RAM) 108, memory 110, a display 112 with a touch-sensitive overlay 114 coupled to an electronic controller 116 that together comprise a touch-sensitive display 118, one or more actuators 120, one or more force sensors 122, an auxiliary input/output (I/O) subsystem 124, a data port 126, a speaker 128, a microphone 130, short-range communications 132, and other device subsystems 134. User-interaction with a graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on an electronic device, is displayed on the touch-sensitive display 118 via the processor 102. The processor 102 may interact with an orientation sensor such as an accelerometer 136 to detect direction of gravitational forces or gravity-induced reaction forces, for example, to determine the orientation of the electronic device 100. The processor 102 may comprise a single processor or multiple processors.

To identify a subscriber for network access, the electronic device 100 uses a Subscriber Identity Module or a Removable User Identity Module (SIM/RUIM) card 138 for communication with a network, such as the wireless network 150. Alternatively, user identification information may be programmed into memory 110.

The electronic device 100 includes an operating system 146 and software programs or components 148 that are executed by the processor 102 and are typically stored in a persistent, updatable store such as the memory 110. Additional applications or programs may be loaded onto the electronic device 100 through the wireless network 150, the auxiliary I/O subsystem 124, the data port 126, the short-range communications subsystem 132, or any other suitable subsystem 134.

A received signal, such as a text message, an e-mail message, or web page download, is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104, for example.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes a capacitive touch-sensitive overlay 114. The overlay 114 may be an assembly of multiple layers in a stack which may include, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

The display 112 of the touch-sensitive display 118 includes a display area in which information may be displayed, and a non-display area extending around the periphery of the display area. Information is not displayed in the non-display area, which is utilized to accommodate, for example, electronic traces or electrical connections, adhesives or other sealants, and/or protective coatings around the edges of the display area.

One or more touches, also known as touch contacts or touch events, may be detected by the touch-sensitive display 118. The processor 102 may determine attributes of the touch, including a location of a touch. Touch location data may include an area of contact or a single point of contact, such as a point at or near a center of the area of contact. When the touch is detected, a signal is provided to the controller 116 from which the touch location may be determined. Signals may be provided to the controller at regular intervals in time for a touch, also known as sampling, such that changes in location of the touch may be detected. A touch may be detected from any suitable contact member, such as a finger, thumb, appendage, or other objects, for example, a stylus, pen, or other pointer, depending on the nature of the touch-sensitive display 118. The controller 116 and/or the processor 102 may detect a touch by any suitable contact member on the touch-sensitive display 118. Multiple simultaneous touches may be detected.

One or more gestures may also be detected by the touch-sensitive display 118. A gesture, such as a swipe, also known as a flick, is a particular type of touch on a touch-sensitive display 118 that begins at an origin point and continues to an end point. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture.

An optional force sensor 122 or force sensors is disposed in any suitable location, for example, between the touch-sensitive display 118 and a back of the electronic device 100 to detect a force imparted by a touch on the touch-sensitive display 118. The force sensor 122 may be a force-sensitive resistor, strain gauge, piezoelectric or piezoresistive device, pressure sensor, or other suitable device. Force as utilized throughout the specification refers to force measurements, estimates, and/or calculations, such as pressure, deformation, stress, strain, force density, force-area relationships, thrust, torque, and other effects that include force or related quantities.

Force information related to a detected touch may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zooming.

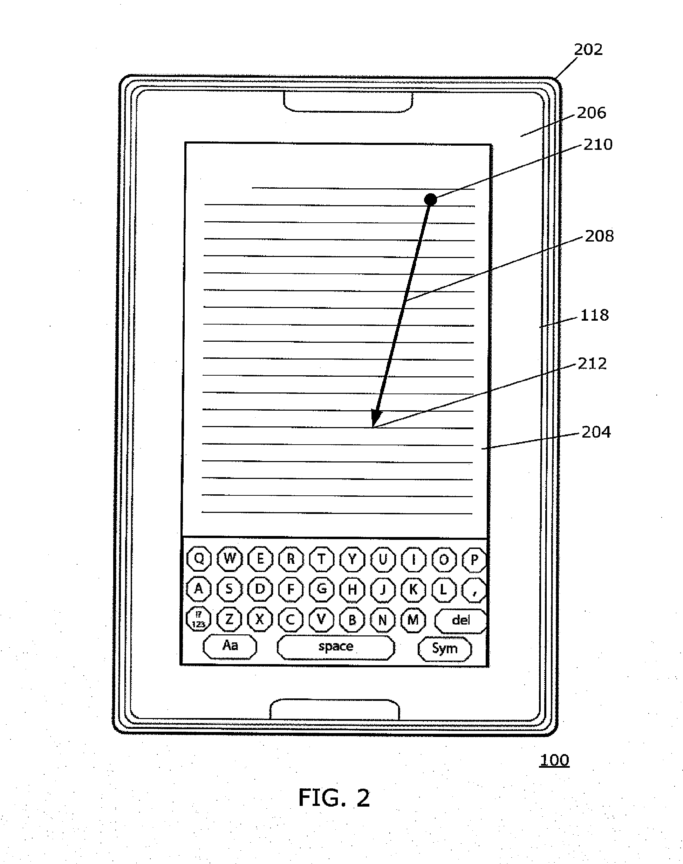

A front view of an example of the electronic device 100 is shown in FIG. 2. The electronic device 100 includes a housing 202 in which the touch-sensitive display 118 is disposed. The housing 202 and the touch-sensitive display 118 enclose components such as the components shown in FIG. 1. The display area 204 of the touch-sensitive display 118 may be generally centered in the housing 202. The non-display area 206 is disposed around the outer periphery of the display area 204.

The touch-sensitive overlay 114 may cover the display area 204 and the non-display area 206 such that a touch on either or both the display area 204 and the non-display area 206 may be detected. The density of touch sensors may differ between the display area 204 and the non-display area 206. For example, the density of nodes in a mutual capacitive touch-sensitive display, or density of locations at which electrodes of one layer cross over electrodes of another layer, may differ between the display area 204 and the non-display area 206.

A gesture 208 received on the touch-sensitive display 118 is illustrated by the arrow, beginning at the origin point 210 and finishing at the end point 212. The controller 116 receives signals when the gesture 208 is detected by the touch-sensitive display 118. The gesture may be utilized to perform any function or operation such as, for example, scrolling or panning. The signals received by the controller 116 may be noisy, causing jitter e.g., slight movement or perceived vibration or change in the touch location, which is unintended. The noise may be, for example, from noise caused by an analog touch controller, quantization error, low signal level when a touch causes a small change in measure capacitance, power supply noise, interference, fragmentation from a touch beginning in the middle of a scan, and so forth, and any combination of these factors. The jitter may be visible to the user, for example, when a cursor or other position indicator is displayed on the touch-sensitive display 118. The jitter may also cause new touch locations to be reported by the controller 116 to the operating system layer (OS layer) or from the OS layer 102 to the application layer. The application layer provides data and/or services that support applications, such as software for file transfers, database access, email, data, and so forth. Frequent reporting of new or spurious touch locations increases processing requirements and may decrease electronic device 100 performance.

Adaptive, also referred to as dynamic or variable filtering, may be utilized to filter touch location signals from the overlay 114 based on the rate of movement of the touch. Utilizing an adaptive low pass filter, greater filtering may be carried out at low rates of movement of the touch when filtering latency may be less noticeable and jitter appears more noticeable. Less or no filtering may be carried out at higher rates of movement of the touch to facilitate responsiveness to the movement.

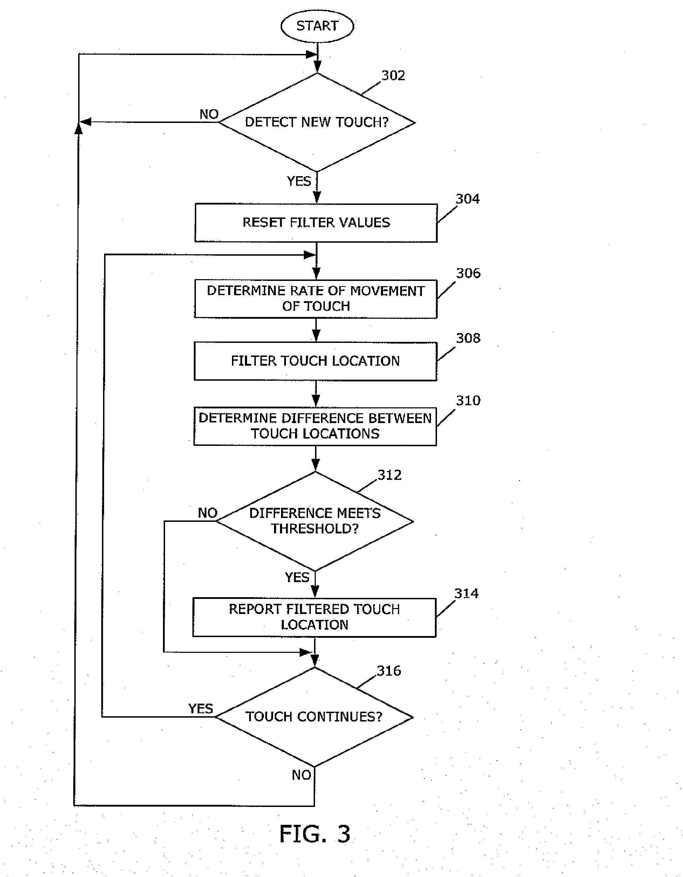

A flowchart illustrating a method of filtering touch data at an electronic device, such as the electronic device 100, is shown in FIG. 3. The method may be carried out by computer-readable code executed, for example, by the controller 116. Alternatively, the method may be carried out by the processor 102, for example, in an OS layer. The method may alternatively be carried out by a combination of the controller 116 and the processor 102. Coding of software for carrying out such a method is within the scope of a person of ordinary skill in the art given the present description. The method may contain additional or fewer processes than shown and/or described, and may be performed in a different order.

When a touch is detected 302, filter values are reset at 304. The filter values may include values related to previous touches, including values related to locations of previous touches and a rate or rates of movement of previous touches. Advantageously, the filter values may be reset such that data from previous touches are not utilized during filtering, and each touch is filtered based on data relating to that touch. When multiple touches that overlap in time are detected, a unique identifier is typically assigned to each different touch. Each of the touches may be advantageously tracked utilizing the identifier and filtered separately based on a rate of movement of that touch.

A rate of movement of the touch, also referred to as a speed of the touch, is determined 306. The rate of movement of the touch may be, for example, a distance between the detected touch location and a filtered touch location established based on the detected touch location taken at a previous sampling time. Utilizing the filtered touch location to determine the rate of movement 306 may reduce the chance of filtering based on incorrect distances determined based on spurious touch locations. The rate of movement may be, for example, a rate of movement in a single axis, rates of movement in each of two or more axes, or a rate of movement within a plane. Determination of the rate of movement within a plane facilitates the same filtering of the touch in both axes to reduce distortion of circular, rounded square, or other touch trajectories.

The touch location is filtered 308 utilizing the rate of movement of the touch. The rate of movement is utilized to determine the magnitude of filtering. The rate of movement of the touch is related to the magnitude of filtering such that filtering is based on the distance determined at 306. Greater filtering is carried out at low rates of movement and less or no filtering is carried out at greater rates of movement. Filtering decreases with increasing rate of movement from maximum filtering to a minimum or no filtering. Filtering may decrease linearly with increasing rate of movement. Alternatively, filtering may decrease non-linearly with increasing rate of movement. At maximum filtering, the filtered touch location is based on the detected touch location and a previous filtered touch location. With decreasing filtering, the filtered touch location is based an increasing amount on the detected touch location and a decreasing amount on the previous filtered touch location. At a high rate of movement, the filtered touch location is the same as the detected touch location. Thus, the touch location is not changed by filtering.

The difference is determined 310 between the filtered touch location determined at 308 and the last filtered touch location reported, for example, to the application layer. The difference may be, for example, a difference in a single axis, a distance in each of two or more axes, or a distance between the touch locations in a plane. When the difference meets a threshold at 312, the filtered touch location is reported 314 to the application layer. The difference meets the threshold when the difference is equal to or greater than the threshold. The threshold value may be any suitable numerical value such that a filtered touch location that is sufficiently different from the previously reported touch location is reported to the application layer and a filtered touch location that is equal or very close to the previously reported touch location is ignored or not reported to the application layer. Utilizing the threshold value, fewer touch locations may be reported, decreasing processing requirements and increasing portable electronic device 100 performance. When the touch continues 316, the process continues at 306.

In an example of filtering touch data at an electronic device, a touch, such as the gesture 208 illustrated in FIG. 2, is detected by the portable electronic device 100. When a touch is detected, beginning at the origin point 210, filter values are reset. The touch location is utilized as the filtered touch location and is reported to the application layer. When the touch continues, the rate of movement of the touch is determined. The rate of movement of the touch may be, for example, determined as:

$$R_{[i]} = \sqrt{(Acc\_x_{[i-1]} - In\_x_{[i]})^2 + (Acc\_y_{[i-1]} - In\_y_{[i]})^2} \, ,$$

where:

$R_{[i]}$ is the rate of movement of the touch;
$Acc\_x_{[i-1]}$ is an x-axis coordinate of the previous filtered touch location;
$Acc\_y_{[i-1]}$ is a y-axis coordinate of the previous filtered touch location;
$In\_x_{[i]}$ is the x-axis coordinate of the detected touch location; and
$In\_y_{[i]}$ is the y-axis coordinate of the detected touch location.

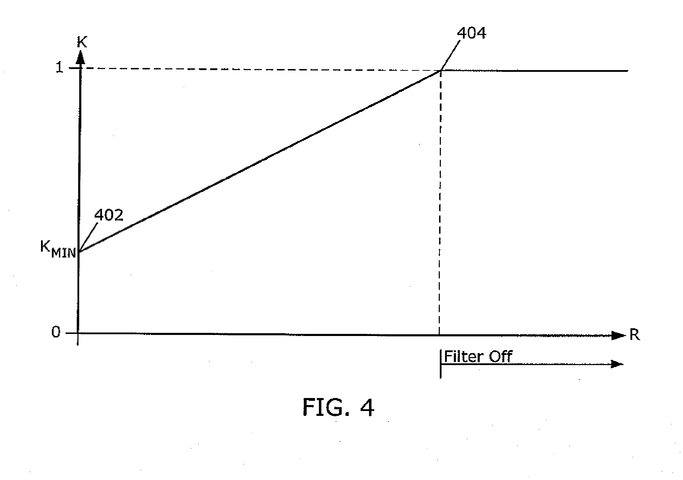

The rate of movement, $R_{[i]}$, is utilized to determine a filter value, $K_{[i]}$. A graph illustrating an example of a relationship between the rate of movement $R_{[i]}$ and the filter value, $K_{[i]}$, is shown in FIG. 4. $K_{[i]}$ increases with increasing $R_{[i]}$, from a minimum value 402 between zero and one to a maximum value 410 of one.

The filtered touch location may be determined, for example, as:

$Acc\_x_{[i]} = K_{[i]}In\_{[i]} + (1 - K_{[i]})Acc\_x_{(i-1)}$ and
$Acc\_y_{[i]} = K_{[i]}In\_y_{[i]} + (1 - K_{[i]})Acc\_y_{(i-1)}$,

where:

$Acc\_x_{[i]}$ is the x-axis coordinate of the filtered touch location;
$Acc\_y_{[i]}$ is the y-axis coordinate of the filtered touch location; and
$K_{[i]}$ is the value of K determined utilizing the detected touch location.

In this example, a filtered x-axis coordinate of the touch location and a filtered y-axis coordinate of the touch location are both determined.

When $K_{[i]}$ is at the minimum value, the filtered touch location is based on the detected touch location and the previous filtered touch location. With increasing $K_{[i]}$, the filtered touch location is based an increasing amount on the detected touch location and a decreasing amount on the previous filtered touch location. When $K_{[i]}$ is equal to one, the filtered touch location is equal to the detected touch location, and the touch location is not changed by the filter. The value of K may be determined utilizing a graph function such as illustrated in FIG. 4. When $K_{[i]}$ is equal to one, the filtered touch location is equal to the detected touch location, and the touch location is not changed by the filter.

The difference is determined between the filtered touch location ($Acc\_x_{[i]}, Acc\_y_{[i]}$) and the filtered touch location last reported, for example, to the application layer. The threshold may be one, for example, such that when the difference between $Acc\_x_{[i]}$ and the previously reported x-axis coordinate of a filtered touch location meets the threshold value of one, the filtered touch location ($Acc\_x_{[i]}, Acc\_y_{[i]}$) is reported. When the difference between $Acc\_y_{[i]}$ and the previously reported y-axis coordinate of a filtered touch location meets the threshold value of one, the filtered touch location ($Acc\_x_{[i]}, Acc\_y_{[i]}$) is reported. Thus, the touch filtered touch location is reported when either the difference between $Acc\_x_{[i]}$ and the previously reported x-axis coordinate of a filtered touch location or the difference between $Acc\_y_{[i]}$ and the previously reported y-axis coordinate of a filtered touch location meets the threshold value.

Utilizing an adaptive low pass filter as described, greater filtering may be carried out at low rates of movement of the touch when filtering latency may be less noticeable and jitter appears more noticeable. Less or no filtering may be carried out at higher rates of movement of the touch to facilitate responsiveness to the movement. Utilizing a threshold value to determine when to report a new touch location, fewer touch locations may be reported, decreasing processing requirements and increasing portable electronic device performance. Use of the adaptive low pass filter facilitates use touch-sensitive displays with lower signal-to-noise ratios such as, for example touch-sensitive displays with large electrode pitch, lower touch-sensitive display excitation voltage, thicker overlays, overlays with low dielectric constant. Such touch-sensitive displays may be utilized with reduced perceptible degradation of accuracy or response time.

A method includes detecting a touch on a touch-sensitive display of an electronic device, determining a distance between a first filtered touch location established based on a first detected touch location at a first time, and a second detected touch location at a second time, filtering noise from the second detected touch location to determine a second filtered touch location, wherein the filtering is based on the distance.

A computer-readable medium has computer-readable code executable by at least one processor of the portable electronic device may be utilized to perform the method.

An electronic device includes a touch-sensitive display configured to detect a touch, and a processor coupled to the touch-sensitive display to determine a distance between a first filtered touch location established based on a first detected touch location at a first time, and a second detected touch location at a second time, and filter noise from the second detected touch location to determine a second filtered touch location. The filtering is based on the distance.

A touch-sensitive display includes a display, a touch-sensitive overlay disposed on the display, and a controller coupled to the touch-sensitive overlay to detect a touch on the touch-sensitive overlay, determine a distance between a first filtered touch location established based on a first detected touch location at a first time, and a second detected touch location at a second time, and filter noise from the second detected touch location to determine a second filtered touch location. The filtering is based on the distance.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

**Claims**

1. A method comprising:

   detecting a touch on a touch-sensitive display of an electronic device;
   determining a distance between a first filtered touch location established based on a first detected touch location at a first time, and a second detected touch location at a second time;
   filtering noise from the second detected touch location to determine a second filtered touch location, wherein the filtering is based on the distance.

2. The method according to claim 1, comprising comparing the second filtered touch location to the first filtered touch location to determine a difference.

3. The method according to claim 2, comprising reporting the second filtered touch location to an application when the difference meets a threshold.

4. The method according to claim 2, comprising ignoring the second filtered touch location when the difference does not meet a threshold.

5. The method according to claim 1, wherein determining is carried out by a controller of the touch-sensitive display.

6. The method according to claim 1, wherein determining is carried out by at least one processor at an operating system layer of the portable electronic device.

7. The method according to claim 1, wherein filtering comprises filtering noise based on a rate of movement of the touch determined utilizing the distance.

8. The method according to claim 7, wherein filtering decreases with increasing rate of movement.

9. The method according to claim 7, wherein filtering decreases linearly with increasing rate of movement.

10. The method according to claim 7, wherein filtering is turned off when the rate of movement meets a threshold.

11. The method according to claim 1, wherein filtering decreases with increasing distance.

12. A computer-readable medium having computer-readable code executable by at least one processor of the portable electronic device to perform the method of any one of claims 1.

13. An electronic device comprising:

a touch-sensitive display configured to detect a touch;
at least one processor coupled to the touch-sensitive display to determine a distance between a first filtered touch location established based on a first detected touch location at a first time, and a second detected touch location at a second time, and filter noise from the second detected touch location to determine a second filtered touch location, wherein the filtering is based on the distance.

14. A touch-sensitive display comprising:

a display;
a touch-sensitive overlay disposed on the display;
a controller coupled to the touch-sensitive overlay to detect a touch on the touch-sensitive overlay, determine a distance between a first filtered touch location established based on a first detected touch location at a first time, and a second detected touch location at a second time, and filter noise from the second detected touch location to determine a second filtered touch location, wherein the filtering is based on the distance.

**Amended claims in accordance with Rule 137(2) EPC.**

1. A method comprising:

detecting a touch on a touch-sensitive display (118) of an electronic device (100);
determining a distance between a first filtered touch location established based on a first detected touch location at a first time, and a second detected touch location at a second time;
filtering noise from the second detected touch location to determine a second filtered touch location, wherein the filtering is based on the distance.

2. The method according to claim 1, comprising comparing the second filtered touch location to the first filtered touch location to determine a difference.

3. The method according to claim 2, comprising reporting the second filtered touch location to an application when the difference meets a threshold.

**4.** The method according to claim 2, comprising ignoring the second filtered touch location when the difference does not meet a threshold.

**5.** The method according to claim 1, wherein determining is carried out by a controller (116) of the touch-sensitive display.

**6.** The method according to claim 1, wherein determining is carried out by at least one processor (102) at an operating system layer of the electronic device (100).

**7.** The method according to claim 1, wherein filtering comprises filtering noise based on a rate of movement of the touch determined utilizing the distance.

**8.** The method according to claim 7, wherein filtering decreases with increasing rate of movement.

**9.** The method according to claim 7, wherein filtering decreases linearly with increasing rate of movement.

**10.** The method according to claim 7, wherein filtering is turned off when the rate of movement meets a threshold.

**11.** The method according to claim 1, wherein filtering decreases with increasing distance.

**12.** A computer-readable medium having computer-readable code executable by at least one processor (102) of the electronic device (100) to perform the method of any one of claims 1 to 11.

**13.** An electronic device (100) comprising:

a touch-sensitive display (118) configured to detect a touch;
at least one processor (102) coupled to the touch-sensitive display to determine a distance between a first filtered touch location established based on a first detected touch location at a first time, and a second detected touch location at a second time, and filter noise from the second detected touch location to determine a second filtered touch location, wherein the filtering is based on the distance.

FIG. 1

FIG. 2

100

START

302

DETECT NEW TOUCH? — NO

YES

RESET FILTER VALUES — 304

DETERMINE RATE OF MOVEMENT OF TOUCH — 306

FILTER TOUCH LOCATION — 308

DETERMINE DIFFERENCE BETWEEN TOUCH LOCATIONS — 310

312

DIFFERENCE MEETS THRESHOLD? — NO

YES

REPORT FILTERED TOUCH LOCATION — 314

316

TOUCH CONTINUES? — YES

NO

FIG. 3

FIG. 4

Europäisches
Patentamt

European
Patent Office

Office européen
des brevets

# EUROPEAN SEARCH REPORT

Application Number

EP 11 15 0257

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 053 757 A (MEADOWS)<br>1 October 1991 (1991-10-01)<br>* column 3, line 64 - column 4, line 5 *<br>* column 35, line 32 - column 38, line 23; figures 1,3A,3B,9,17 *<br>----- | 1-14 | INV.<br>G06F3/041<br>G06F3/048 |
| X | US 5 837 947 A (TETERWAK)<br>17 November 1998 (1998-11-17)<br>* column 3, line 63 - column 8, line 67; figures 1,4-6,7,9 *<br>----- | 1,2,5-9,<br>12-14 | |
| X | US 5 229 551 A (MCDERMOTT ET AL)<br>20 July 1993 (1993-07-20)<br>* column 3, line 19 - column 4, line 64 *<br>* column 6, line 17 - column 8, line 42; figures 2,4 *<br>----- | 1,2,5-7,<br>12-14 | |

TECHNICAL FIELDS
SEARCHED     (IPC)

G06F

The present search report has been drawn up for all claims

| Place of search | Date of completion of the search | Examiner |
|---|---|---|
| Berlin | 28 April 2011 | Taylor, Paul |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................
& : member of the same patent family, corresponding
    document

EPO FORM 1503 03.82 (P04C01)

**ANNEX TO THE EUROPEAN SEARCH REPORT**
**ON EUROPEAN PATENT APPLICATION NO.**                EP 11 15 0257

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-2011

| Patent document cited in search report | | Publication date | Patent family member(s) | | Publication date |
|---|---|---|---|---|---|
| US 5053757 | A | 01-10-1991 | NONE | | |
| US 5837947 | A | 17-11-1998 | EP | 0789317 A1 | 13-08-1997 |
| | | | JP | 9311752 A | 02-12-1997 |
| US 5229551 | A | 20-07-1993 | WO | 9309522 A1 | 13-05-1993 |